# EUROPEAN PATENT APPLICATION

(11) **EP 4 823 013 A1**
(43) Date of publication of application: **14.10.2026**
(21) Application number: 24902201.3
(22) Date of filing: 26.08.2024
(51) Int. Cl.: H04B 10/29

(54) **DATA TRANSMISSION METHOD AND DEVICE FOR DIGITAL OPTICAL FIBER REPEATER, AND ELECTRONIC DEVICE**

(30) Priority: 11.12.2023 CN 202311695927
(71) Applicant: Sunwave Communications Co., Ltd., Hangzhou, Zhejiang 310053 (CN)
(72) Inventor: WU, Wenquan, Hangzhou, Zhejiang 310053 (CN); CHEN, Guoan, Hangzhou, Zhejiang 310053 (CN); CHEN, Jinli, Hangzhou, Zhejiang 310053 (CN)
(74) Representative: Meyer-Dulheuer MD Legal Patentanwälte PartG mbB
(86) International application number: PCT/CN2024/114526
(87) International publication number: WO 2025/123775

(57) **Abstract**

A data transmission method and a device for a distributed antenna system, and an electronic device are provided. The data transmission method includes assembling to-be-transmitted target data into a plurality of target compression units; dividing the plurality of target compression units into different categories of target compression groups according to different preset compression ratios of the plurality of target compression units, and any of the target compression groups including at least one of the plurality of target compression units; compressing the target compression groups into corresponding target transmission groups according to the quantity of the at least one of plurality of target compression units in each of the target compression groups and compression ratios corresponding to the target compression groups; constructing target basic frames according to the target transmission groups, and any of the target basic frames including at least one of the target transmission groups; and transmitting the target base frames.

## Description

### CROSS-REFERENCE TO RELATED APPLICATION

This application claims priority to Chinese patent application No. 202311695927.7, filed on December 11, 2023, and titled "DATA TRANSMISSION METHOD AND DEVICE FOR DISTRIBUTED ANTENNA SYSTEM, AND ELECTRONIC DEVICE", the content of which is hereby incorporated by reference in its entirety.

### TECHNICAL FIELD

The present invention relates to the field of communication network technology, and in particular, to a data transmission method and a device for a distributed antenna system, and an electronic device.

### BACKGROUND

A distributed antenna system (DAS) is a relay repeater between a base station (BS) and a mobile station (MS), is a radio transmission transfer device that plays a role of signal enhancement during wireless communication transmission, and is mainly composed of a local machine, an optical fiber, and a remote machine. When the distributed antenna system is in operation, an electrical signal is converted into an optical signal, and the optical signal is transmitted between the local machine and the remote machine via the optical fiber. Optical fiber transmission between the local machine and the remote machine generally adopts a common public radio interface (CPRI) protocol, and baseband data is generally compressed to obtain a larger transmission bandwidth and transmit a larger data volume. The related transmission methods, which are based on the CPRI, mostly compress all baseband data to the same bit width according to a fixed compression ratio. The smaller a compression ratio, i.e., the larger a compressed data bit width, the smaller a distortion caused by the data compression, the smaller a compression noise caused by the data compression, and the better a transmission performance. Meanwhile, the more a data volume required to be transmitted, and the smaller a transmission bandwidth, so that the smaller a system capacity. On the contrary, the larger the compression ratio, i.e., the smaller the compressed data bit width, the larger the transmission bandwidth, and the larger the system capacity. Meanwhile, the greater the transmission noise, and the poorer the transmission performance. It is difficult to balance the system capacity and the transmission performance in different application scenarios.

For the issue in the related art that both the system capacity and the transmission performance cannot be balanced, no effective solution has been proposed at present.

### SUMMARY

According to various embodiments of the present invention, a data transmission method and a device for a distributed antenna system, an electronic device, and a storage medium are provided.

In a first aspect, the data transmission method for the distributed antenna system is provided in an embodiment, including the following steps: assembling to-be-transmitted target data into a plurality of target compression units; dividing the plurality of target compression units into different categories of target compression groups according to different preset compression ratios of the plurality of target compression units, and any of the target compression groups including at least one of the plurality of target compression units; compressing the target compression groups into corresponding target transmission groups according to the quantity of the at least one of plurality of target compression units in each of the target compression groups and compression ratios corresponding to the target compression groups; constructing target basic frames according to the target transmission groups, and any of the target basic frames including at least one of the target transmission groups; and transmitting the target base frames.

In some embodiments, compressing the target compression groups into corresponding target transmission groups according to the quantity of the at least one of the plurality of target compression units in each of the target compression groups and compression ratios corresponding to the target compression groups further includes: defining the compression ratios corresponding to the target compression groups as a first category identifier of the target compression groups, defining the quantity of the at least one of the plurality of target compression units in each of the target compression groups as a second category identifier of the target compression groups, defining the first category identifier and the second category identifier as category identifiers of the target compression groups, and compressing the at least one of the plurality of target compression units in each of the target compression groups according to the category identifiers to obtain the target transmission groups.

In some embodiments, compressing the at least one of the plurality of target compression units in the target compression groups according to the category identifiers to obtain the target transmission groups further includes: compressing the target compression units in the target compression groups into the target transmission groups according to the category identifiers of the target compression groups and a preset instant compression algorithm.

In some embodiments, constructing the target basic frames according to the target transmission groups further includes: encapsulating the target transmission groups and control information corresponding to the target transmission groups into the target basic frames according to a preset basic frame format. Any of the target basic frames includes at least one of the target transmission groups.

In some embodiments, the data transmission method further includes: converting category identifiers corresponding to each of the target transmission groups in the target basic frames into control characters, respectively, and defining the control characters as control information corresponding to the target basic frames.

In some embodiments, transmitting the target basic frame further includes: transmitting the target basic frames by a plurality of optical fibers.

In a second aspect, a data transmission device for a digital optical repeater is provided in an embodiment. The device includes an assembling module, a grouping module, a compressing module, a framing module, and a transmitting module. The assembly module is configured to assemble to-be-transmitted target data into a plurality of target compression units. The grouping module is configured to divide the plurality of target compression units into different categories of target compression groups according to different preset compression ratios of the plurality of target compression units. Any of the target compression groups includes at least one target compression unit. The compression module is configured to compress the target compression groups into corresponding target transmission groups according to the quantity of the at least one of plurality of target compression units in each of the target compression groups and compression ratios corresponding to the target compression groups. The framing module is configured to construct a target basic frame according to target frame data. Any of target basic frames includes at least one of the target transmission groups. The transmission module is configured to transmit the target basic frames.

In some embodiments, the framing module includes a converting sub-module and an encapsulating sub-module. The converting sub-module is configured to convert category identifiers corresponding to each of the target transmission groups in the target basic frames into control characters, and take the control characters as control information corresponding to the target basic frames. The encapsulating sub-module is configured to encapsulate the target transmission groups and the control information corresponding to the target transmission groups into the target basic frames according to a preset basic frame format.

In a third aspect, an electronic device is provided in an embodiment. The electronic device includes a memory and a processor. The memory stores a computer program. The processor is configured to execute the computer program to perform the data transmission method for the distributed antenna system in the first aspect.

In a fourth aspect, a computer-readable storage medium storing a computer program is provided in an embodiment. The computer program is executed by a processor to perform the data transmission method for the distributed antenna system in the first aspect.

Details of one or more embodiments of present invention are presented in the attached drawings and descriptions below, and other features, purposes and advantages of the present invention will become apparent from the description, drawings and claims.

### BRIEF DESCRIPTION OF THE DRAWINGS

In order to provide a clearer explanation of the technical solutions in the present embodiments or related technology of the present invention, a brief introduction will be given to the accompanying drawings required for the description of the embodiments or related technology. Obviously, the accompanying drawings described below are only embodiments of the present invention. For those skilled in the art, other drawings can be obtained based on the disclosed drawings without creative labor.
FIG. 1 is a structural diagram of a device for a distributed antenna system in an embodiment.
FIG. 2 is a flowchart of a data transmission method for a distributed antenna system in an embodiment.
FIG. 3 is a flowchart of a data transmission method for a distributed antenna system in an alternative embodiment.
FIG. 4 is a structural block diagram of a data transmission device for a distributed antenna system in an embodiment.
FIG. 5 is a structural block diagram of a framing module in a data transmission device for a distributed antenna system in an embodiment.
FIG. 6 is a schematic diagram of another data transmission method for a distributed antenna system in an embodiment.

### DETAILED DESCRIPTION

The following will provide a clear and complete description of the technical solution in the embodiments of the present invention, in communication with the accompanying drawings. Obviously, the described embodiments are only a part, but not all, of the embodiments of the present invention. Based on the embodiments in the present invention, all other embodiments obtained by the skilled in the art without creative labor fall within a scope of protection of the present invention.

Unless otherwise defined, the technical terms or scientific terms involved in the present invention should have general meanings understood by those skilled in the art. In the present invention, words such as "one", "a", "a kind of", "the", "this" and so on do not represent a quantity limitation, and may specifically refer to singular or plural. The terms "include", "comprise", "have", and any variants thereof in the present invention are intended to cover non-exclusive inclusion. For example, a process, a method, a system, a product, or a device including a series of steps or modules (units) is not limited to listed steps or modules (units), but may include unlisted steps or modules (units), or may include other steps or modules (units) inherent to the process, the method, the product, or the device. Terms such as "connect", "combine", and "couple" in the present invention are not limited to a physical connection or a mechanical connection, but may include electrical connections, whether direct connections or indirect connections. In the present invention, "a plurality of" means two or more. For example, "A and/or B" may indicate three cases: A exists alone, A and B exist simultaneously, and B exists alone. Generally, a character "/" indicates an "or" relationship between associated objects. In the present invention, the terms "first", "second", "third", and so on are only used to distinguish similar objects, and do not represent a specific order for the objects.

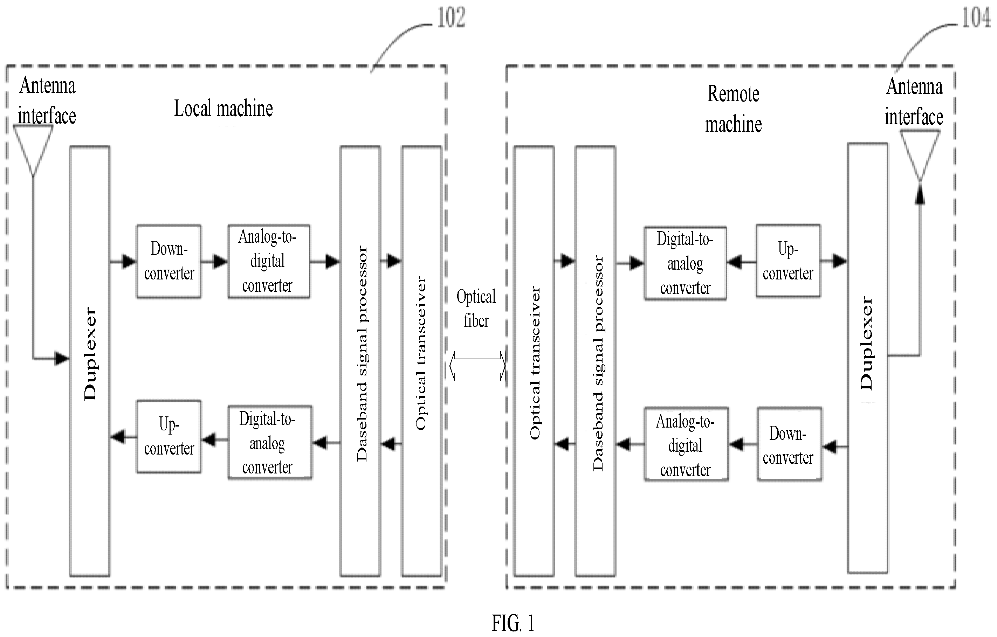

In the present embodiment, a method embodiment may be applied to a device for a distributed antenna system. FIG. 1 is a diagram of a device for a distributed antenna system device in the present embodiment. Referring to FIG. 1, the device may include a local machine 102, a remote machine 104, and an optical fiber which is represented by a bi-directional arrow. The optical fiber transmission generally adopts a common public radio interface (CPRI) protocol. The local machine 102 may include, but not be limited to, an antenna interface, a duplexer, a down-converter, an analog-to-digital converter (ADC), an up-converter, a digital-to-analog converter (DAC), a baseband signal processor, and an optical transceiver. The remote machine 104 may have the same composition structure as the local machine 102. The skilled in the art may understand that a structure shown in FIG. 1 is merely an example, and does not limit the structure of the device for the distributed antenna system. For example, the device may further include more or fewer components than those shown in FIG. 1, or have a configuration different from that shown in FIG. 1. In an embodiment, the local machine and the remote machine further include a power amplifier.

The device for the distributed antenna system may be configured as a signal intermediary to transmit a signal from a local machine to a remote machine. The local machine 102 is configured to receive a downlink signal, convert the downlink signal from an electrical signal into an optical signal that is convenient for optical fiber transmission, and send the optical fiber signal to the remote machine 104. The optical fiber is configured to transmit the optical signal input by the local machine 102 to the remote machine 104. The remote machine 104 is configured to receive the optical signal from the local machine 102, restore the optical signal into another electrical signal, i.e., an uplink signal, and then transmit the uplink signal. The downlink signal is received by the local machine 102 via an antenna interface. The downlink signal is down-converted into an intermediate frequency signal via the down-converter. The intermediate frequency signal is sent to the analog-to-digital converter for sampling. The intermediate frequency signal is converted into a digital signal. The digital signal is converted into the optical signal after being processed by the baseband signal processor. The optical signal is transmitted to the remote machine via an optical fiber. The optical signal is received by an optical transceiver of the remote machine 104. The optical signal is converted into a digital signal after being processed by the baseband signal processor, and digital-to-analog conversion is performed on the digital signal via the digital-to-analog converter to obtain an analog signal. The analog signal is converted into an uplink signal after being up-converted. The uplink signal is sent via the antenna interface. In addition, the device for the distributed antenna system may be configured to transmit a signal from the remote machine to the local machine. Duplexers of the local machine 102 and the remote machine 104 are configured to separate a transmitted signal from a received signal, such that signal receiving and signal transmitting can be performed simultaneously.

In the present embodiment, a data transmission method for the distributed antenna system is provided. The data transmission method in the embodiment may be performed by the baseband signal processor, an optical transceiver, and an optical fiber in the distributed antenna system device referring to FIG. 1. The baseband signal processor and the optical transceiver may be located in the local machine 102 or the remote machine 104 according to different signal transmission directions in different scenarios, which will not be limited herein.

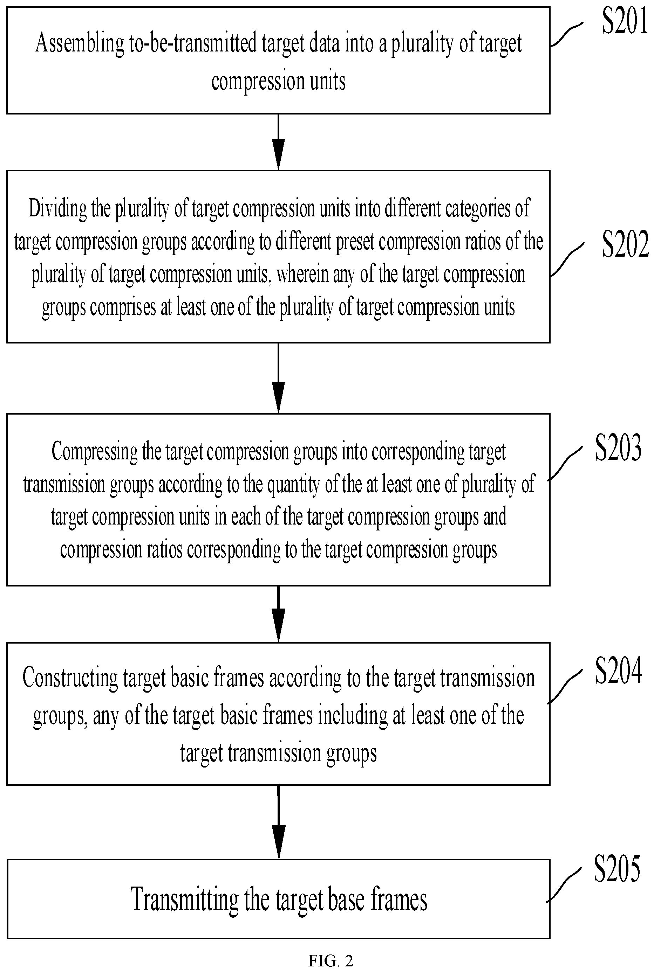

FIG. 2 is a flowchart of a data transmission method for a distributed antenna system in an embodiment of the present invention. Referring to FIG. 2, the method includes the following step 201 to step 205.

Step 201 includes assembling to-be-transmitted target data into a plurality of target compression units.

Specifically, the target data may mainly include modulating data (I/Q data) of a baseband signal. When the distributed antenna system transmits signals between the local machine and the remote machine based on the optical fiber, the signals may be transmitted in a unit of a basic frame. A line rate of the optical fiber transmission may be fixed, and under a certain system clock, the maximum amount of data that can be transmitted in the basic frame may also be fixed. For the basic frame, except control information transmitted at a frame header, a remaining space is generally configured to transmit compressed modulating data of the baseband signal. The target data may be assembled into the plurality of target compression units. The amount of data contained in each of the target compression units may be fixed, which is an amount of data processed when one compression operation is performed and can be set according to specific application scenarios and transmission requirements.

Step 202 includes dividing the plurality of target compression units into different categories of target compression groups according to different preset compression ratios of the plurality of target compression units. Any of the target compression groups includes at least one of the plurality of target compression units.

Specifically, the compression ratios may refer to degrees of data compression, and may be represented by ratios of sizes of data before compression to sizes of data after compression, respectively. Different data are suitable for different compression ratios. Data with higher requirements on data precision and a signal-to-noise ratio and a smaller bandwidth may be prioritized for performance and configured with a lower compression ratio. Data with larger data bandwidth and lower requirements on the data precision may be prioritized for system capacity and configured with a higher compression ratio reduction rate.

The plurality of target compression units are divided into different categories of target compression groups according to different preset compression ratios of the plurality of target compression units. Any of the target compression groups includes at least one of the plurality of target compression units. The plurality of target compression units in a same target compression group may all have a same compression ratio. The target compression units in different target compression groups may have different compression ratios.

Step 203 includes compressing the target compression groups into corresponding target transmission groups according to the quantity of the at least one of plurality of target compression units in each of the target compression groups and compression ratios corresponding to the target compression groups.

Specifically, the plurality of target compression units may be compressed according to the target compression groups. For target compression units in the same target transmission group, a uniform compression ratio may be set, and the target compression units may be sequentially compressed to obtain target transmission groups with different bit widths. For example, when a target compression group A includes x target compression units, and a compression ratio corresponding to x target compression units is defined as y, x compression operations may be performed on the target compression group A to obtain a corresponding target transmission group A. A bit width of the target transmission group A may be defined as z. When a target compression group B includes u target compression units, and a compression ratio corresponding to u target compression units is defined as v, z compression operations may be performed on the target compression group A to obtain a corresponding target transmission group B. A bit width of the target transmission group B may be defined as w.

Step 204 includes constructing target basic frames according to the target transmission groups. Any of the target basic frames includes at least one of the target transmission groups.

Specifically, the optical fiber may transmit the data in a unit of a frame. In the present embodiment, the target transmission groups may be re-framed according to the preset basic frame format to obtain the target basic frames. A basic frame may include a plurality of target transmission groups corresponding to a plurality of compression ratios, respectively.

Step 205 includes transmitting the target basic frames. Specifically, the compressed target data may be transmitted between the local machine and the remote machine in the form of the target basic frames based on the optical fiber in the device for the distributed antenna system.

Through the above step 201 to step 205, the to-be-transmitted target data is assembled into the plurality of target compression units. The plurality of target compression units are divided into different categories of the target compression groups according to different preset compression ratios of the plurality of target compression units. Any of the plurality of target compression groups includes at least one target compression unit. Each of the plurality of target compression group is compressed into corresponding one of the plurality of target transmission groups according to the quantity of the target compression units in each of the plurality of target compression groups and the compression ratios corresponding to the plurality of target compression groups. The plurality of target basic frames are constructed according to the target transmission groups. Each of the target basic frames includes at least one target transmission group. The plurality of target basic frames are transmitted. A related data transmission method generally compresses all to-be-transmitted data based on a fixed compression ratio. Since different data has different characteristics and has different requirements on the system capacity and the transmission performance. Therefore, the fixed compression ratio leads to that a requirement of a part of data on the system capacity cannot be met, or a requirement of a part of data on the transmission performance cannot be met. However, in the present invention, the different compression ratios are set for the data according to the characteristics and actual requirements of the to-be-transmitted data. Compression is performed according to the compression ratios, and then the target transmission groups may be re-framed. The basic frame of fiber optical fiber transmission can contain multiple groups of data corresponding to different compression ratios. In the present invention, by means of data division, for requirements of the categories of data on the system capacity and the transmission performance, the compression ratios may be flexibly configured, and then the data may be uniformly transmitted, so as to solve an issue in the related art that the system capacity and the transmission performance cannot be balanced, thereby balancing the requirements of the data on the system capacity and the transmission performance.

In some embodiments, based on the step 203, compressing the target compression groups into corresponding target transmission groups according to the quantity of the at least one of the plurality of target compression units in each of the target compression groups and compression ratios corresponding to the target compression groups may further include: defining the compression ratios corresponding to the target compression groups as a first category identifier of the target compression groups, defining the quantity of the at least one of the plurality of target compression units in each of the target compression groups as a second category identifier of the target compression groups, defining the first category identifier and the second category identifier as category identifiers of the target compression groups, and compressing the target compression units in each of the target compression groups according to the category identifiers to obtain the target transmission groups.

Furthermore, in some embodiments, based on the step 203, compressing the at least one of the plurality of target compression units in the target compression groups according to the category identifiers to obtain the target transmission groups may further include: compressing the target compression units in the target compression groups into the target transmission groups according to the category identifiers of the target compression groups and a preset instant compression algorithm. The instant compression algorithm may include a block floating point (BFP). The block floating point may not be required to pre-store a searching table corresponding to compressed data. A compression bit width may be simply specified to complete the data compression algorithm processing. The greater the bit width, and the less the compression noise. The bit width of each of the target compression units may be obtained by conversion according to a size of each of target compression units and a corresponding compression ratio.

Moreover, in some embodiments, based on the step 204, constructing the target basic frames according to the target transmission groups may further include: encapsulating the target transmission groups and control information corresponding to the target transmission groups into the target basic frames according to a preset basic frame format. Each of the target basic frames includes at least one target transmission group. The optical fiber transmission between the local machine and the remote machine of the distributed antenna system may usually adopt the CPRI protocol. In some embodiments, according to the basic frame format in the CPRI protocol, a CPRI basic frame may be constructed by defining control information corresponding to each of the target transmission groups as a frame header and defining the target transmission groups as frame data. The control information may include protocol control information in a form of a control word.

In some embodiments, the control information may further include the quantity of target transmission units and a compression ratio corresponding to each of the target transmission groups in the target basic frame, i.e., the category identifiers of a target compression group corresponding to each of the target transmission groups. Specifically, the category identifiers corresponding to each of the target transmission groups in the target basic frames may be converted into control characters. The control characters may be defined as the control information corresponding to the target basic frames. The category identifiers may be transmitted in the CPRI basic frame in the form of the control characters, and a receiving end may first extract category identifier information in the CPRI basic frame before decompression, and then the category identifiers are configured to decompress data.

Furthermore, in some embodiments, based on the step 205, transmitting the target basic frame may include transmitting the target basic frame by a plurality of optical fibers.

The distributed antenna system may take an optical wave as a carrier, and may take the optical fiber as a transmission media to transmit information from the local machine to the remote machine or from the remote machine to the local machine. In a related device for the distributed antenna system, the local machine and the remote machine may transmit information by a single optical fiber, which has a limited transmission capacity and is not flexible enough. In the present embodiment, dual optical fibers or a plurality of optical fibers are configured for transmission, which expands the transmission capacity. Furthermore, data transmitted by the optical fiber may be independent of that transmitted by another, and different carrier information may be transmitted in different compression manners, thereby improving a transmission bandwidth. When the plurality of optical fibers are used for transmission, the transmission bandwidth may be multiplied, correspondingly, more physical interfaces may be required, and complexity of data processing may increase. Therefore, in some embodiments, dual-fiber transmission may be selected to achieve a balance between the transmission capacity and the transmission bandwidth, as well as the quantity of the physical interfaces and the processing complexity. During in operation, the quantity of the physical optical ports configured for the optical fiber transmission may be configured according to an environment.

The present embodiment may be illustrated and explained by alternative embodiments.

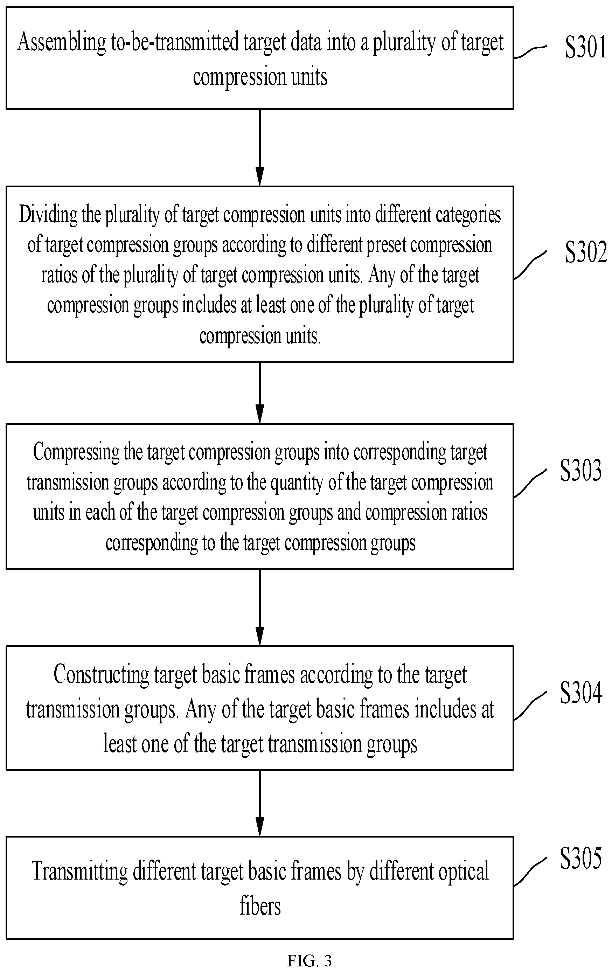

FIG. 3 is a flowchart of a data transmission method for a distributed antenna system according to an embodiment of the present invention. Referring to FIG. 3, the method may include following step 301 to step 305.

Step 301 includes assembling to-be-transmitted target data into a plurality of target compression units.

Step 302 includes dividing the plurality of target compression units into different categories of target compression groups according to different preset compression ratios of the plurality of target compression units. Any of the target compression groups may include at least one of the plurality of target compression units.

Step 303 includes compressing the target compression groups into corresponding target transmission groups according to the quantity of the at least one of plurality of target compression units in each of the target compression groups and compression ratios corresponding to the target compression groups.

Step 304 includes constructing target basic frames according to the target transmission groups. Any of the target basic frames may include one of the target transmission groups.

Step 305 may include transmitting different target basic frames by different optical fibers.

In the present embodiment, a data transmission device for the distributed antenna system is provided. The data transmission device is configured to execute the above embodiments and optional implementations, and the foregoing description may not be repeated. The terms "module", "unit", "sub-unit", and the like used in the following may implement a combination of software and/or hardware of a preset function. Although the device described in the following embodiments is implemented by a software, a hardware or a combination of software and hardware may be possible and contemplated to implement the following embodiments.

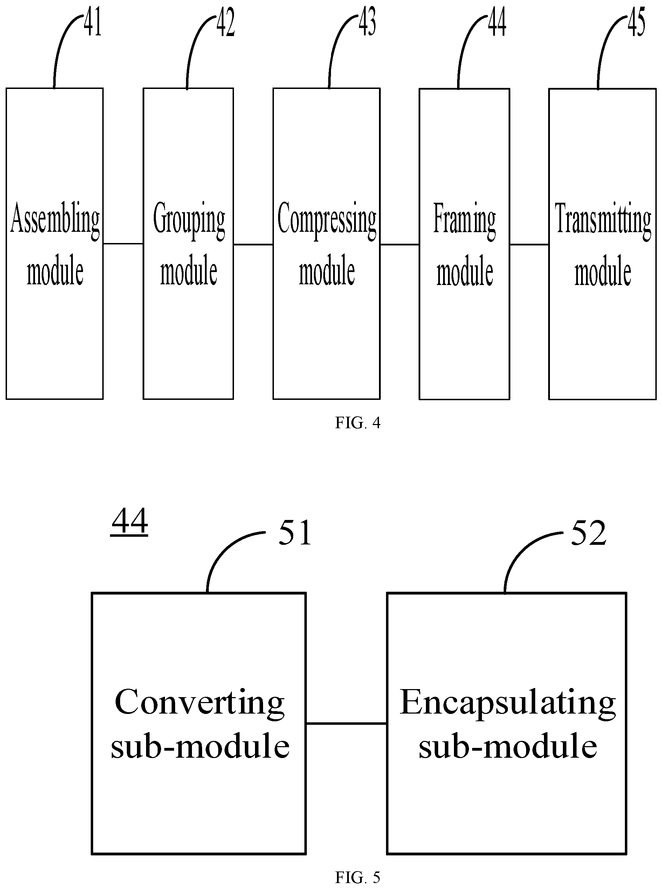

FIG. 4 is a structural block diagram of the data transmission device for the digital optical repeater. Referring to FIG. 4, the device includes an assembling module 41, a grouping module 42, a compressing module 43, a framing module 44, and a transmitting module 45.

The assembly module 41 is configured to assemble to-be-transmitted target data into a plurality of target compression units. The grouping module 42 is configured to divide the plurality of target compression units into different categories of target compression groups according to different preset compression ratios of the plurality of target compression units. Any of the target compression groups includes at least one target compression unit. The compression module 43 is configured to compress the target compression groups into corresponding target transmission groups according to the quantity of the at least one of plurality of target compression units in each of the target compression groups and compression ratios corresponding to the target compression groups. The framing module 44 is configured to construct a target basic frame according to target frame data. Any of target basic frames includes at least one of the target transmission groups. The transmission module 45 is configured to transmit the target basic frames.

FIG. 5 is a structural block diagram of a framing module for the data transmission device for the digital optical repeater. Referring to FIG. 5, the framing module 44 may include a converting sub-module 51 and an encapsulating sub-module 52.

The converting sub-module 51 is configured to convert category identifiers corresponding to each of the target transmission groups in the target basic frames into control characters, and take the control characters as control information corresponding to the target basic frames. The encapsulating sub-module 52 is configured to encapsulate the target transmission groups and the control information corresponding to the target transmission groups into the target basic frames according to a preset basic frame format. Any of the target basic frames includes at least one of the target transmission groups.

Above modules may be functional modules or program modules, and may be implemented by a software or a hardware. For modules implemented by the hardware, the above modules may be located in a same processor. Alternatively, the above modules may be separately located in different processors in any combination form. Alternatively, the above modules may be defined as different processors, respectively.

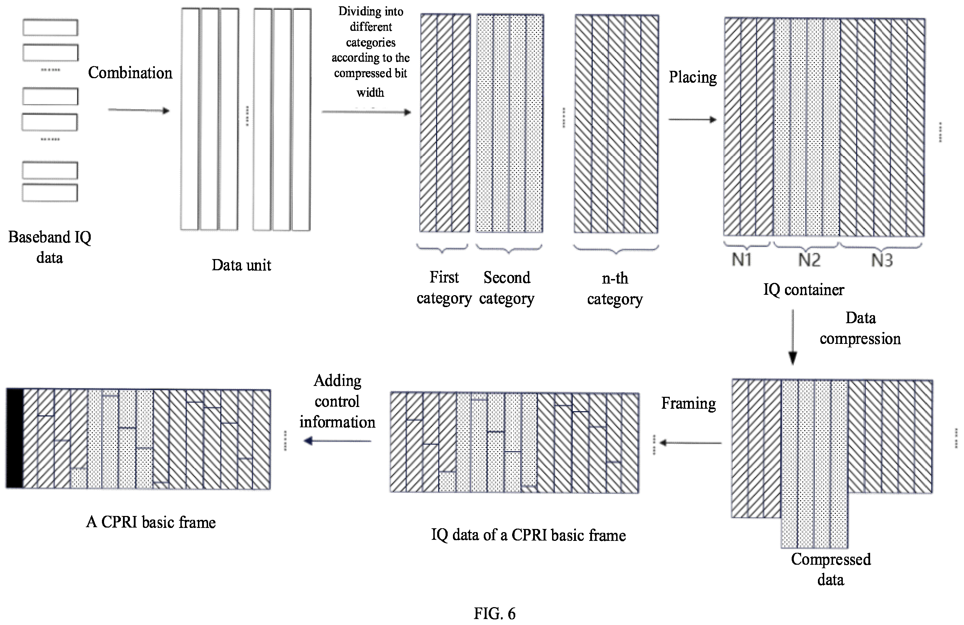

In addition, FIG. 6 is a schematic diagram of another data transmission method for a distributed antenna system in the present embodiment. Referring to FIG. 6, to-be-transmitted baseband IQ data may be combined into data units. The data units may be divided into different categories according to compressed bit widths, such as a first category, a second category, ..., and a n-th category. Each category of data may have a category identifier. Information in the category identifier may include an identifier of the compressed data bit width and the quantity of data units of the category of data. Different stripes may represent different categories in FIG. 6. Furthermore, the compressed data bit width may be corresponding to a compression ratio, which can be converted to each other. The divided baseband IQ data may be placed into IQ containers to form different data groups, such as N1, N2, and N3. Data compression may be performed on each of data groups, respectively, according to the compressed bit width of each of the data groups to obtain compressed data groups. Different lengths of rectangles may represent different data bit widths. After the compression being completed, the compressed data may be re-framed according to the basic frame format in the CPRI protocol to obtain IQ data of a CPRI basic frame. According to the IQ data of the CPRI basic frame, the category identifier may be added to the frame header in the form of a control word to obtain the CPRI basic frame for transmission.

In the present embodiment, an electronic device is further improved. The electronic device includes a memory and a processor. The memory stores a computer program and a processor. The processor is configured to execute the computer program to perform the steps in any one of the above methods.

Alternatively, the electronic device may further include a transmission device and an input and output device. The transmission device may be connected to the processor. The input and output device may be connected to the processor.

Alternatively, in the present embodiment, the processor may be configured to perform the following step 1 to step 5 by executing the computer program.

Step 1 includes assembling to-be-transmitted target data into a plurality of target compression units.

Step 2 includes dividing the plurality of target compression units into different categories of target compression groups according to different preset compression ratios of the plurality of target compression units. Any of the target compression groups includes at least one of the plurality of target compression units.

Step 3 includes compressing the target compression groups into corresponding target transmission groups according to the quantity of the at least one of plurality of target compression units in each of target compression groups and the compression ratios corresponding to the target compression groups.

Step 4 includes constructing target basic frames according to the target transmission groups. Any of the target basic frames includes at least one of the target transmission groups.

Step 5 includes transmitting the target base frames.

Specific examples in the present embodiment may refer to embodiments described in the above embodiments or alternative implementations, and details will not be described again in the present embodiment.

Moreover, with reference to the data transmission method for the distributed antenna system in the above embodiments, a storage medium is further provided in the present embodiment. A computer program is stored in the storage medium. When the computer program is executed by a processor, any of data transmission methods for the distributed antenna system in the above embodiments is implemented.

The specific examples described herein are only configured to explain an application, rather than to limit the application. According to the embodiments provided in the present invention, all other embodiments obtained by the skilled in the art without creative labor are within the scope of protection of the present invention.

Obviously, drawings are only some examples or embodiments of the present invention, the skilled in the art may apply the present invention to other similar situations according to the drawings without creative labor. In addition, it can be understood that although the work made in the development process may be complex and long, for the skilled in the art, certain changes in design, manufacture or production according to the technical content disclosed in the present invention are only conventional technical means, and should not be considered as insufficient content disclosed in the present invention.

The term "embodiment" in the present invention means that a specific feature, a structure, or a characteristic described with reference to the embodiments may be included in at least one embodiment of the present invention. The same phrase in various places in the description may not refer to the same embodiment, nor are the phrases mutually exclusive and independent or alternative to other embodiments. The skilled in the art can clearly or implicitly understand that the embodiments described in the present invention may be combined with other embodiments without a conflict.

The above embodiments only express several implementations of the present invention The description thereof is more specific and detailed, but it cannot be understood as a limitation to the scope of patent protection. It should be noted that the skilled in the art may further make several variations and improvements without departing from a concept of the present invention, which all fall within a protection scope of the present invention. Therefore, the protection scope of the present invention shall be subject to the appended claims.

## Claims

1. A data transmission method for a distributed antenna system, **characterized by** comprising:
assembling to-be-transmitted target data into a plurality of target compression units;
dividing the plurality of target compression units into different categories of target compression groups according to different preset compression ratios of the plurality of target compression units, wherein any of the target compression groups comprises at least one of the plurality of target compression units;
compressing the target compression groups into corresponding target transmission groups according to the quantity of the at least one of plurality of target compression units in each of the target compression groups and compression ratios corresponding to the target compression groups;
constructing target basic frames according to the target transmission groups, wherein any of the target basic frames comprises at least one of the target transmission groups; and
transmitting the target base frames.

2. The data transmission method of claim 1, wherein compressing the target compression groups into corresponding target transmission groups according to the quantity of the at least one of the plurality of target compression units in each of the target compression groups and compression ratios corresponding to the target compression groups further comprises:
defining the compression ratios corresponding to the target compression groups as a first category identifier of the target compression groups;
defining the quantity of the at least one of the plurality of target compression units in each of the target compression groups as a second category identifier of the target compression groups;
defining the first category identifier and the second category identifier as category identifiers of the target compression groups; and
compressing the at least one of the plurality of target compression units in each of the target compression groups according to the category identifiers to obtain the target transmission groups.

3. The data transmission method of claim 2, wherein compressing the at least one of the plurality of target compression units in the target compression groups according to the category identifiers to obtain the target transmission groups further comprises:
compressing the target compression units in the target compression groups into the target transmission groups according to the category identifiers of the target compression groups and a preset instant compression algorithm.

4. The data transmission method of claim 1, wherein constructing the target basic frames according to the target transmission groups further comprises:
encapsulating the target transmission groups and control information corresponding to the target transmission groups into the target basic frames according to a preset basic frame format, wherein any of the target basic frames comprises at least one of the target transmission groups.

5. The data transmission method of claim 1, further comprising:
converting category identifiers corresponding to each of the target transmission groups in the target basic frames into control characters, respectively, and defining the control characters as control information corresponding to the target basic frames.

6. The data transmission method of claim 1, wherein transmitting the target basic frames further comprises: transmitting the target basic frames by a plurality of optical fibers.

7. A data transmission apparatus for a distributed antenna system, **characterized by** comprising an assembling module, a grouping module, a compressing module, a framing module, and a transmitting module,
wherein the assembly module is configured to assemble to-be-transmitted target data into a plurality of target compression units;
the grouping module is configured to divide the plurality of target compression units into different categories of target compression groups according to different preset compression ratios of the plurality of target compression units, wherein any of the target compression groups comprises at least one target compression unit;
the compression module is configured to compress the target compression groups into corresponding target transmission groups according to the quantity of the at least one of plurality of target compression units in each of the target compression groups and compression ratios corresponding to the target compression groups;
the framing module is configured to construct a target basic frame according to target frame data, wherein any of target basic frames comprises at least one of the target transmission groups; and the transmission module is configured to transmit the target basic frames.

8. The data transmission apparatus of claim 7, wherein the framing module comprises a converting sub-module and an encapsulating sub-module,
the converting sub-module is configured to convert category identifiers corresponding to each of the target transmission groups in the target basic frames into control characters, and take the control characters as control information corresponding to the target basic frames; and
the encapsulating sub-module is configured to encapsulate the target transmission groups and the control information corresponding to the target transmission groups into the target basic frames according to a preset basic frame format.

9. An electronic device, comprising a memory and a processor, **characterized in that** the memory stores a computer program, and the processor is configured to execute a computer program to perform the data transmission method for the distributed antenna system of any one of claims 1 to 6.

10. A computer-readable storage medium storing a computer program, **characterized in that** the computer program is executed by a processor to perform the data transmission method for the distributed antenna system of any one of claims 1 to 6.
